(19) **Europäisches Patentamt**

**European Patent Office**

**Office européen des brevets**

(11) **EP 0 831 057 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.[7]: **C01B 17/50**, C01B 13/18

(21) Anmeldenummer: **97113721.1**

(22) Anmeldetag: **08.08.1997**

(54) **Verfahren zur Behandlung von Metallsulfaten**

Process for the treatment of metal sulfates

Procédé pour le traitement de sulfates métalliques

(84) Benannte Vertragsstaaten:
**DE ES FR GB IT**
Benannte Erstreckungsstaaten:
**SI**

(30) Priorität: **21.09.1996 DE 19638841**

(43) Veröffentlichungstag der Anmeldung:
**25.03.1998 Patentblatt 1998/13**

(73) Patentinhaber: **Sachtleben Chemie GmbH 47198 Duisburg (DE)**

(72) Erfinder: **Wagner, Hartmut, Dr. 47445 Moers (DE)**

(74) Vertreter: **Uppena, Franz, Dr. et al Dynamit Nobel Aktiengesellschaft, Patente, Marken & Lizenzen 53839 Troisdorf (DE)**

(56) Entgegenhaltungen:
**EP-A- 0 125 142      EP-A- 0 132 243 EP-A- 0 133 505**

**Beschreibung**

Die Erfindung bezieht sich auf ein Verfahren zur thermischen Spaltung von Metallsulfaten.

In der DE 33 27 769 wird ein Verfahren zur Aufarbeitung von bei der $TiO_2$-Produktion nach dem Sulfatverfahren anfallender Dünnsäure beschrieben, bei dem vorgesehen ist, den anfallenden Filterkuchen in einem Fließbettreaktor oder in einem Reaktor mit zirkulierender Wirbelschicht bei Temperaturen zwischen 850 und 1100 °C zu spalten. Bei diesem Verfahren werden Schwefelkiese, Elementarschwefel, Kohle oder Heizöl eingesetzt. Bei diesem Verfahren ist nachteilig, daß eine relativ hohe $CO_2$-Emission zu verzeichnen ist und eine nachteilige Bildung von Nitrosylschwefelsäure auftritt, die bedingt ist durch den Gehalt an Stickstoffverbindungen in der eingesetzten Kohle bzw. dem eingesetzten Heizöl.

Gegenstand der EP-A-0 125 142 ist ein Verfahren zur nahezu vollständigen Regenerierung von Schwefelsäure und Metallsulfate enthaltender, in der Titandioxidindustrie, Stahlindustrie und anderen Industrien anfallender Abfallsäure der Schwefelsäurenlaugung, die entweder als konzentrierte Lösung oder als durch teilweise Verdampfung des Wassers der Abfallsäure erzeugte Aufschlämmung oder als durch vollständige Verdampfung des Wassers der Abfallsäure und Abtrennung der Schwefelsäure erzeugten, die Metallsulfate enthaltenden Filterkuchen vorliegt. Dabei sollen keine Fremdstoffe, wie Kalk oder andere Calciumverbindungen, verwendet werden und das Verfahren in einer preiswerten Anlage mit geringem Brennstoffverbrauch durchführbar sein. Die Metallsulfate werden bei 700 bis 1200°C in Metalloxide und SO2-haltiges, anschließend zu Schwefelsäure umgesetztes Gas, unter reduzierenden Bedingungen thermisch gespalten. Als Brennstoff und als reduzierendes Material wird Kohle und/oder Heizöl eingesetzt. Auch bei diesem Verfahren tritt eine relativ hohe CO2-Emission und die Bildung von Nitrosylschwefelsäure auf.

Das Verfahren gemäß EP-A-0 132 243 dient der Wiedergewinnung von Blei und Bleilegierungselementen aus Bleibatterie-Schrott, der zusammen mit einem festen Reduktionsmittel, üblicherweise feinstteiligem Koks, unter starkem Rühren auf eine Temperatur von 1050 bis 1250°C erhitzt wird, so daß das nicht-metallische Blei und die nicht-metallischen Legierungselemente reduziert werden. Die Sulfate werden in SO2 und Bleioxide gespalten und zu metallischem Blei reduziert und das organische Material dabei verbrannt oder pyrolysiert, ohne die anderen Reaktionsprozess zu stören.

Der Erfindung liegt die Aufgabe zugrunde, ein Verfahren zur thermischen Spaltung von Metallsulfaten zu schaffen, das eine niedrigere $CO_2$-Emission aufweist und das relativ kostengünstig bei weitgehender Einsparung von Rohstoffen durchgeführt werden kann.

Die der Erfindung zugrunde liegende Aufgabe wird durch ein Verfahren zur thermischen Spaltung von Metallsulfaten bei 850 bis 1300 °C in reduzierender Atmosphäre in Metalloxide und Schwefeldioxid gelöst, bei dem als Reduktionsmittel und Energieträger Abfallkunststoffe eingesetzt werden. Als Abfallkunststoffe werden beispielsweise anfallende Reste bei der Kunststoffverarbeitung, Abfälle aus der Automobil- oder Verpackungsindustrie eingesetzt. Dabei handelt es sich in der Regel um Kunststoffgemische aus Polyester, Polyacrylsäureester, Polyethylen, Polypropylen, Polystyrol, Polymethacrylsäureester, Polyisobutylen, Polybutadien, Polycarbonat und Polyterephtalat.

Mit diesem kostengünstigen Verfahren kann die $CO_2$-Emission in vorteilhafter Weise erniedrigt werden, da aufgrund des Gehalts an Wasserstoff in diesen Kunststoffen auch Wasserdampf anfällt, was mit einer Verringerung des Bedarfs an kohlenstoffhaltigen Rohstoffen wie Kohle und Öl verbunden ist.

Eine bevorzugte Ausgestaltung der Erfindung besteht darin, daß als Metallsulfate Eisen-II-sulfatmonohydrat und/oder Magnesiumsulfat und/oder Aluminiumsulfat und/oder Chrom-III-sulfat eingesetzt werden. Diese Metallsulfate werden gemäß der nachfolgenden Reaktionsgleichungen umgesetzt, wobei R für das Reduktionsmittel steht:

$$2FeSO_4 \times H_2O + R \rightarrow Fe_2O_3 + 2SO_2 + R\text{-}O$$

$$3FeSO_4 \times H_2O + 2R \rightarrow Fe_3O_4 + 3SO_2 + 2R\text{-}O$$

$$MgSO_4 + R \rightarrow MgO + SO_2 + R\text{-}O$$

$$Al_2(SO_4)_3 + 3R \rightarrow Al_2O_3 + 3SO_2 + 3R\text{-}O$$

$$Cr_2(SO_4)_3 + 3R \rightarrow Cr_2O_3 + 3SO_2 + 3R\text{-}O$$

Diese Metallsulfate fallen bei der Aufarbeitung von Dünnsäure bei der $TiO_2$-Herstellung nach dem Sulfatverfahren als Filterkuchen an, der so in vorteilhafter Weise kostengünstig und relativ umweltfreundlich durch Schonung der natürlichen Rohstoffe sowie durch Verminderung der $CO_2$-Emission behandelt werden kann.

Gemäß einer weiteren bevorzugten Ausgestaltung der Erfindung werden als Metallsulfate Calciumsulfat eingesetzt. Auf diese Weise läßt sich auch das Müller-Kühne-Verfahren in vorteilhafter Weise durchführen, bei dem Gips im Gemisch mit Zusätzen thermisch in Drehrohrofen gespalten wird, wobei nach dem erfindungsgemäßen Verfahren in vorteilhafter Weise auf den Einsatz von kohlenstoffhaltigen Rohstoffen verzichtet werden kann.

Nach einer weiteren bevorzugten Ausgestaltung der Erfindung werden die Metallsulfate vor der Behandlung mit den Abfallkunststoffen vermischt. Dabei ist vorteilhaft, daß die Eintragung der Metallsulfate und der Abfallkunststoffe in den Reaktor, der beispielsweise als zirkulierende Wirbelschicht oder als Drehrohrofen gestaltet sein kann, auf relativ einfache Weise erfolgen kann, wobei sich durch die vorherige Vermischung relativ schnell eine ausreichend reduzierende Atmosphäre innerhalb des Reaktors einstellt.

Gemäß einer weiteren bevorzugten Ausgestaltung der Erfindung werden die Abfallkunststoffe in einer Vorbehandlung bis auf eine durchschnittliche Korngröße von 6 bis 12 mm zerkleinert. Die eingesetzten Abfallkunststoffe können dadurch in vorteilhafter Weise relativ schnell vergasen und als Reduktionsmittel im Inneren des Reaktors wirken.

Nach einer weiteren bevorzugten Ausgestaltung der Erfindung werden als Abfallkunststoffe Polyethylen und/oder Polypropylen und/oder Polystyrol eingesetzt. Diese Abfallkunststoffe eignen sich in vorteilhafter Weise auch als Energieträger, so daß innerhalb des Reaktors relativ schnell Temperaturen um 1000 °C eingestellt werden können, die für eine ausreichend schnelle Reaktion erforderlich sind.

Gegenstand der Erfindung ist schließlich die Verwendung des Verfahrens zur Spaltung von Filterkuchen, der bei der Eindampfung von Dünnsäuren aus der $TiO_2$-Produktion nach dem Sulfatverfahren anfällt. Unter der Bezeichnung Spaltung wird die reduzierende Umsetzung der Sulfate zu Metalloxiden, Wasserdampf, $SO_2$ und einer Sauerstoffverbindung des Reduktionsmittels verstanden. Dabei ist vorteilhaft, daß die Spaltung des Filterkuchens relativ kostengünstig und problemlos durchgeführt werden kann.

Die Erfindung wird nachfolgend anhand der Beispiele näher erläutert.

Beispiel

12,5 t/h Filtersalz aus der $TiO_2$-Produktion nach dem Sulfatverfahren, 6,25 t/h Pyrit, 0,63 t/h Abbrand werden zusammen mit 1,42 t/h Abfallkunststoffgranulat unter Zugabe von 25 600 $Nm^3$/h Luft in einen Wirbelofen eingebracht und dort bei 970 °C behandelt. Die mittlere Korngröße (durchschnittliche Korngröße) des Abfallkunststoffgranulates, daß aus einer Mischung aus Polyethylen und Polyproplylen besteht, beträgt 10 mm. Das bei der thermischen Behandlung im Wirbelofen entstehende Prozeßgas enthält 3,9 t/h $CO_2$.

Vergleichsbeispiel 1

12,5 t/h Filtersalz aus derselben $TiO_2$-Produktion, 6,25 t/h Pyrit, 0,63 t/h Abbrand und 2,4 t/h Steinkohle werden unter Zugabe von 29 300 $Nm^3$/h Luft in den Wirbelofen eingebracht und bei 970 °C behandelt. Das entstehende Prozeßgas enthält 5,6 t/h an $CO_2$.

Vergleichsbeispiel 2

12,5 t/h Filtersalz aus derselben $TiO_2$-Produktion, 6,25 t/h Pyrit, 0,63 t/h Abbrand und 2,66 t/h Braunkohle werden unter Zugabe von 24 600 $Nm^3$/h Luft in den Wirbelofen eingebracht und bei 970 °C behandelt. Das entstehende Prozeßgas des Reaktors enthält 4,3 t/h $CO_2$.

Ein Vergleich der Vergleichsbeispiele 1 und 2 mit dem Beispiel macht deutlich, daß in allen drei Fällen die in etwa gleiche Menge an Filterkuchen gespalten wird, wobei in allen drei Fällen der gleiche Umsatzgrad zu verzeichnen war. Die $CO_2$-Menge im Prozeßgas des Reaktors liegt bei den Vergleichsbeispielen 1 und 2 höher, was auf den Einsatz von Braun- bzw. Steinkohle im Vergleich zu den eingesetzten Abfallkunststoffen gemäß dem Beispiel zurückzuführen ist.

**Patentansprüche**

1. Verfahren zur thermischen Spaltung von Metallsulfaten bei 850 bis 1300 °C in reduzierender Atmosphäre in Metalloxide und Schwefeldioxid, **dadurch gekennzeichnet, daß** als Reduktionsmittel und Energieträger Abfallkunststoffe eingesetzt werden.

2. Verfahren nach Anspruch 1, bei dem als Metallsulfate Eisen-II-sulfatmonohydrat und/oder Magnesiumsulfat und/oder Aluminiumsulfat und/oder Chrom-III-sulfat eingesetzt werden.

3. Verfahren nach Anspruch 1, bei dem als Metallsulfate Calciumsulfat eingesetzt wird.

4. Verfahren nach einem der Ansprüche 1 bis 3, bei dem die Metallsulfate vor der Behandlung mit den Abfallkunststoffen vermischt werden.

5. Verfahren nach einem der Ansprüche 1 bis 4, bei dem die Abfallkunststoffe in einer Vorbehandlung bis auf eine durchschnittliche Korngröße von 6 bis 12 mm zerkleinert werden.

6. Verfahren nach einem der Ansprüche 1 bis 5, bei dem als Abfallkunststoffe Polyethylen und/oder Polypropylen und/oder Polystyrol eingesetzt werden.

7. Verwendung des Verfahrens nach einem der Ansprüche 1 bis 6 zur Spaltung von Filterkuchen, der bei der Eindampfung von Dünnsäuren aus der $TiO_2$-Produktion nach dem Sulfatverfahren anfällt.

**Claims**

1. Method for thermal cleaving of metal sulphates into metal oxides and sulphur dioxide at 850 to 1300°C in reducing atmosphere, **characterized in that** waste plastics materials are used as reducing agents and energy carriers.

2.  Method according to claim 1, wherein iron-II-sulphate monohydrate and/or magnesium sulphate and/or aluminium sulphate and/or chromium-III-sulphate are used as the metal sulphates.

3.  Method according to claim 1, wherein calcium sulphate is used as the metal sulphates.

4.  Method according to one of claims 1 to 3, wherein the metal sulphates are mixed with the waste plastics materials before treatment.

5.  Method according to one of claims 1 to 4, wherein the waste plastics materials are comminuted, in a preliminary treatment, to an average grain size of 6 to 12 mm.

6.  Method according to one of claims 1 to 5, wherein polyethylene and/or polypropylene and/or polystyrene are used as the waste plastics materials.

7.  Application of the method according to one of claims 1 to 6 for the cleaving of filter cake which is obtained when dilute acids from $TiO_2$-production according to the sulphate method are concentrated.

**Revendications**

1.  Procédé de décomposition thermique de sulfates métalliques en oxydes métalliques et dioxyde de soufre, à une température de 850 à 1 300 °C, dans une atmosphère réductrice, **caractérisé en ce que** l'on utilise comme agent réducteur et apporteur d'énergie des déchets de matières plastiques.

2.  Procédé selon la revendication 1, dans lequel on utilise comme sulfate métallique le sulfate de fer (II) monohydraté et/ou le sulfate de magnésium et/ou le sulfate d'aluminium et/ou le sulfate de chrome (III).

3.  Procédé selon la revendication 1, dans lequel on utilise comme sulfate métallique le sulfate de calcium.

4.  Procédé selon l'une quelconque des revendications 1 à 3, dans lequel on mélange les sulfates métalliques avec les déchets de matières plastiques avant le traitement.

5.  Procédé selon l'une quelconque des revendications 1 à 4, dans lequel on broie les déchets de matières plastiques dans un traitement préliminaire jusqu'à ce qu'ils aient une taille de grain moyenne de 6 à 12 mm.

6.  Procédé selon l'une quelconque des revendications 1 à 5, dans lequel on utilise comme déchets de matières plastiques du polyéthylène et/ou du polypropylène et/ou du polystyrène.

7.  Utilisation du procédé selon l'une quelconque des revendications 1 à 6 pour la décomposition du gâteau de filtration qui se forme lors de l'évaporation des acides dilués provenant de la production de $TiO_2$ par le procédé au sulfate.